# EUROPEAN PATENT SPECIFICATION

(11) **EP 4 006 408 B1**
(45) Date of publication and mention of the grant of the patent: **29.05.2024**
(21) Application number: 20924803.8
(22) Date of filing: 17.11.2020
(51) Int. Cl.: F21S 41/143, F21S 41/151, F21S 41/255, F21S 41/27, F21S 41/43, F21S 41/147, F21S 41/20, F21S 41/24

(54) **VEHICLE LIGHT OPTICAL ELEMENT ASSEMBLY, VEHICLE LIGHTING DEVICE, VEHICLE LIGHT AND VEHICLE**
FAHRZEUGLEUCHTE, FAHRZEUGBELEUCHTUNGSVORRICHTUNG, FAHRZEUGLEUCHTE UND FAHRZEUG
ENSEMBLE D'ÉLÉMENTS OPTIQUES DE LUMIÈRE DE VÉHICULE, MODULE D'ÉCLAIRAGE DE VÉHICULE, LUMIÈRE DE VÉHICULE ET VÉHICULE

(30) Priority: 09.03.2020 CN 202020281769 U
(43) Date of publication of application: 01.06.2022
(73) Proprietor: Hasco Vision Technology Co., Ltd., Jiading District Shanghai 201821 (CN)
(72) Inventor: ZHU, He, Shanghai 201821 (CN); QIU, Zhiping, Shanghai 201821 (CN); SANG, Wenhui, Shanghai 201821 (CN)
(74) Representative: SSM Sandmair
(86) International application number: PCT/CN2020/129309
(87) International publication number: WO 2021/179664

(56) References cited:
- WO-A1-2020/064978
- WO-A1-2021/078114
- WO-A1-2021/078115
- CN-A- 108 474 534
- CN-A- 109 140 377
- CN-A- 109 268 774
- CN-U- 209 782 494
- CN-U- 209 801 362
- US-A1- 2017 089 536
- US-B2- 9 719 648
- US-B2- 10 082 272

## Description

### Cross Reference to Related Applications

This application claims the benefit of Chinese Patent Application No. 202020281769.6, filed on March 9, 2020.

### Field

The present invention relates to vehicle lights, and specifically relates to a vehicle light optical element assembly. In addition, the present invention further relates to a vehicle lighting device, a vehicle light, and a vehicle.

### Background

In recent years, vehicle lights and headlamp modules assembled in vehicle lights have been rapidly developed. From the early halogen lamps to the later Xenon lamps and to the current LEDs and laser light sources, the vehicle lights have become more intelligent, and the modeling is more differentiated. In various vehicle light sources, LED light sources are gradually getting the attention of automobile manufacturers due to their excellent performance and low-cost advantages. With the development of the LED light sources, their light distribution structure is gradually developing. For example, in the international publication No. WO2020/064978A1, the light incident section, the light exit section, and the third section are formed into an integrated structure to generate a predetermined low-beam distribution or high-beam distribution. In the international publication No. WO2021/078114A1, the primary optical element and secondary optical element are integrated into one piece to achieve the high-beam and low-beam functions, and the functional diversity of the optical elements of the vehicle lamp is achieved through the installation of spacers or sharp grooves. US 2017/089536 discloses another vehicle projection lighting system.

In the prior art, a projection lighting system of an LED light source commonly used in vehicle lights generally includes a light source, a reflection element, a light shield plate and an optical lens. Light emitted by the light source is emitted to the light shield plate after being reflected by the reflection element. After being intercepted by the light shield plate, the light is projected by the optical lens to form a lighting light shape with a light and shade cut-off line. However, due to a large light emitting angle of the LED light source, the dimension of the reflection element needs to have a larger coverage range relative to a light-exiting angle of the light source to ensure certain system light efficiency, but this is in prominent contradiction with the trend of increasingly compact modeling of vehicles in the future. Therefore, a compact, lightweight, and efficient optical system is needed to meet the strong market demand.

In view of the above-mentioned shortcomings of the prior art, it is necessary to design a vehicle light optical element assembly.

### Summary

The problem to be solved by the first aspect of the present invention is to provide a vehicle light optical element assembly which is compact in structure, smaller in size and high in assembling accuracy.

In addition, the problem to be solved by the second aspect of the present invention is to provide a vehicle lighting device. A vehicle light optical element assembly in the vehicle lighting device is compact in structure, smaller in size and high in assembling accuracy.

Further, the problem to be solved by the third aspect of the present invention is to provide a vehicle light. A vehicle light optical element assembly in the vehicle light is compact in structure, smaller in size and high in assembling accuracy.

Further, the problem to be solved by the fourth aspect of the present invention is to provide an automobile. A vehicle light optical element assembly of the vehicle is compact in structure, smaller in size and high in assembling accuracy.

In order to solve the above-mentioned technical problems, the first aspect of the present invention provides a vehicle light optical element assembly with the features of claim 1.

As a preferred structural form, a plurality of low-beam condensing parts are provided in a left-right direction, and a plurality of high-beam condensing parts are provided in a left-right direction.

As another preferred structural form, the low-beam condensing part and the high-beam condensation part are both a condensing cup structure,
wherein a back end of the condensation cup structure is provided with a concave cavity; the bottom of the concave cavity is provided with a protrusion; an external contour surface of the condensation cup structure is of a curved structure having an aperture that is gradually increased from the back end to the front end; or
wherein the condensation cup structure is solid, a light-incidence surface of which is a plane, a convex curved surface, or a concave curved surface; and an external contour surface of the condensation cup structure is of a curved structure having an aperture that is gradually increased from the back end to the front end.

More preferably, the low-beam condensation part is of a protrusion structure which protrudes towards the back, and the high-beam condensing part is a protrusion structure which protrudes towards the back.

The second aspect of the present invention provides a vehicle lighting device according to claim 5, including low-beam light sources, high-beam light sources, and the vehicle light optical element assembly according to any one of the above-mentioned technical solutions. The low-beam light sources are in one-to-one correspondence to the low-beam condensing parts, and the high-beam light sources are in one-to-one correspondence to the high-beam condensing parts. As a specific implementation mode, the vehicle lighting device further includes a low-beam circuit board and a high-beam circuit board; the low-beam light sources are provided on the low-beam circuit board, and the high-beam light sources are provided on the high-beam circuit board; or the vehicle lighting device further includes a circuit board, and the low-beam light sources and the high-beam light sources are both provided on the circuit board.

The third aspect of the present invention provides a vehicle light according to claim 7, including at least one vehicle lighting device according to any one of the technical solutions.

The fourth aspect of the present invention provides a vehicle according to claim 8, including the vehicle light according to the above-mentioned technical solution.

By means of the above-mentioned technical solutions, the vehicle light optical element assembly of the present invention includes the low-beam primary optical element, the high-beam primary optical element provided below the low-beam primary optical element, and the projection lens provided at the front end of the low-beam primary optical element and/or the high-beam primary optical element. The low-beam primary optical element and/or the high-beam primary optical element are/is integrated with the projection lens; and the low-beam primary optical element and the high-beam primary optical element are suitable for focusing and collimating light and then forming a low-beam lighting light shape and a high-beam lighting light shape via the projection lens. By means of integrating the low-beam primary optical element with the projection lens, or integrating the high-beam primary optical element with the projection lens, or simultaneously integrating the low-beam primary optical element and the high-beam primary optical element with the projection lens, the size of the vehicle light optical element assembly can be effectively reduced without affecting high-beam lighting and low-beam lighting, and the installation accuracy and the optical system accuracy can also be improved.

Other advantages of the present invention and the technical effects of the preferred implementation modes will be further described in the following specific implementation modes.

### Brief Description of the Drawings

Figure 1 is a three-dimensional structural schematic diagram of a vehicle light optical element assembly of a first specific embodiment of the present invention;
Figure 2 is a side view of a vehicle light optical element assembly of the first specific embodiment of the present invention;
Figure 3 is a cutaway view of Figure 2;
Figure 4 is a cutaway view of another condensing structure of the first specific embodiment of the present invention;
Figure 5 is a three-dimensional structural schematic diagram of a vehicle light optical element assembly of a second specific embodiment of the present invention;
Figure 6 is a cutaway view of Figure 5;
Figure 7 is a three-dimensional structural schematic diagram I of a vehicle light optical element assembly of a third specific embodiment of the present invention;
Figure 8 is a three-dimensional structural schematic diagram II of a vehicle light optical element assembly of the third specific embodiment of the present invention;
Figure 9 is a three-dimensional structural schematic diagram III of a vehicle light optical element assembly of the third specific embodiment of the present invention;
Figure 10 is a cutaway view of Figure 9;
Figure 11 is a structural schematic diagram of a vehicle lighting device of a specific implementation mode of the present invention;
Figure 12 is a schematic diagram of an automob lamp light shape in a low-beam mode of a specific implementation mode of the present invention; and
Figure 13 is a schematic diagram of an automobile lamp light shape in a high-beam mode of a specific implementation mode of the present invention.

### Descriptions of numerals in the drawings:

| | | | |
|---|---|---|---|
| 1: | low-beam primary optical element | 11: | low-beam condensing part |
| 12: | low-beam light passing part | 13: | low-beam cut-off line structure |
| 14: | low-beam light-exiting surface | 2: | high-beam primary optical element |
| 21: | high-beam condensing part | 22: | high-beam light passing part |
| 23: | high-beam cut-off line structure | 24: | high-beam light-exiting surface |
| 3: | projection lens | 31: | light-incidence part of the projection lens |
| 32: | lens light-exiting part | 4: | wedge-shaped gap |
| 5: | low-beam light source | 6: | high-beam light source |
| 7: | vehicle lighting device | 8: | low-beam cut-off line |
| 9: | automobile lamp light shape in a low-beam mode | 10: | automobile lamp light shape in a high-beam mode |

### Detailed Description of the Embodiments

Specific implementation modes of the present invention will be described in detail below with reference to the accompanying drawings. It should be understood that the specific implementation modes described herein are only used to illustrate and explain the present disclosure, and are not intended to limit the present invention.

Firstly, it should be noted that in the following description, some orientation words, such as "back", "front", "left-right", etc., that are involved in order to clearly illustrate the technical solutions of the present disclosure are all analogous to meanings of orientations pointed by a light-exiting path. For example, a vehicle light optical element assembly is taken as an example. The end, close to a low-beam light source or a high-beam light source, of the vehicle light optical element assembly is the back end, and the end far away from the low-beam light source or the high-beam light source is the front end. It can also be understood that the end, provided with the condensing part, of the vehicle light optical element assembly is the back end, and the end provided with the lens light-exiting part is the front end; and relative to the front-back direction of the vehicle light optical element assembly, a direction from the left side to the right side of the vehicle light optical element assembly is a left-right direction.

In the description of the present invention, it should be noted that the terms "installation" and "connection" should be understood in a broad sense unless otherwise specified and limited. For example, it may be fixed connection, detachable connection, or integrated connection, or may be direct connection or indirect connection through an intermediate medium, or may be internal communication of two elements or interaction between two elements. For those of ordinary skill in the art, the specific meanings of the above terms in the present invention can be understood according to specific situations.

The present invention provides a vehicle light optical element assembly, including a low-beam primary optical element 1, a high-beam primary optical element 2 provided below the low-beam primary optical element 1, and a projection lens 3 provided at the front end of the low-beam primary optical element 1 and/or the high-beam primary optical element 2.

The low-beam primary optical element 1 and/or the high-beam primary optical element 2 are/is integrated with the projection lens 3; and the low-beam primary optical element 1 and the high-beam primary optical element 2 are suitable for focusing and collimating light and then forming a low-beam lighting light shape and a high-beam lighting light shape via the projection lens 3.

It can be seen from the above-mentioned description that the vehicle light optical element assembly of the present invention mainly has three basic structure solutions: First, the low-beam primary optical element 1 and the projection lens 3 are integrated, that is, a light-exiting surface of the low-beam primary optical element 1 and a light-incidence surface of the projection lens 3 are coplanar, and the high-beam primary optical element 2 is provided below the low-beam primary optical element 1. Second, the high-beam primary optical element 2 and the projection lens 3 are integrated, that is, a light-exiting surface of the high-beam primary optical element 2 and the light-incidence surface of the projection lens 3 are coplanar, and the low-beam primary optical element 1 is provided above the high-beam primary optical element 2. Third, the projection lens 3 is simultaneously integrated with the low-beam primary optical element 1 and the high-beam primary optical element 2, that is, the light-incidence surface of the projection lens 3 is coplanar with the light-exiting surface of the low-beam primary optical element 1 and the light-exiting surface of the high-beam primary optical element 2, and the high-beam primary optical element 2 is provided below the low-beam primary optical element 1. This setting has the advantages that a space occupied by the vehicle light optical element assembly in a vehicle lighting device and the size of the vehicle lighting device are reduced without affecting a light-exiting effect and the light-exiting efficiency; moreover, the low-beam primary optical element 1 and/or the high-beam primary optical element 2 and the projection lens 3 are made into a whole, so that the number of parts can be reduced, the positioning and installation error between original parts can also be reduced, and the accuracy of an optical system of the vehicle lighting device is improved.

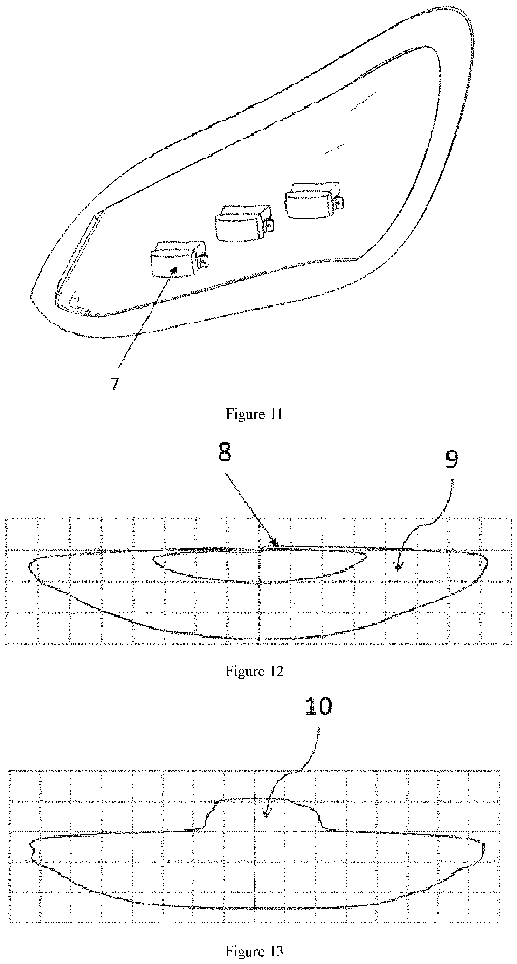

The low-beam primary optical element 1 and/or the high-beam primary optical element 2 and the projection lens 3 in the present invention are made into a whole, but this does not affect the formed automobile lamp light shape. Both the automobile lamp light shape in the low-beam mode as shown in Figure 12 and the automobile lamp light shape in the high-beam mode as shown in Figure 13 can meet an automobile lamp lighting requirement.

As a preferred structural form, the projection lens 3 includes a light-incidence part 31 of the projection lens 3 and a lens light-exiting part 32; the light-incidence part 31 of the projection lens 3 is a plane, a backwards protruding curved surface or a forwards protruding curved surface; and the light-exiting part 32 is a forwards protruding curved surface.

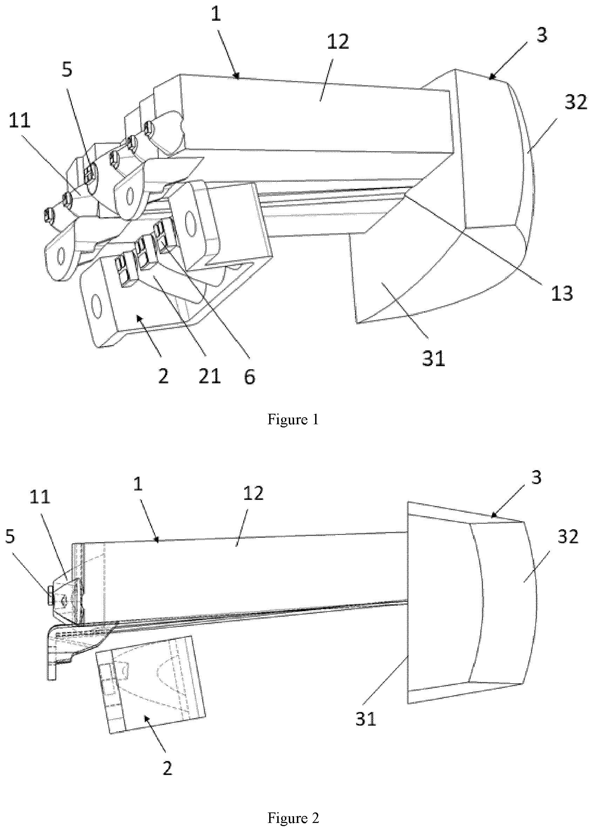

As shown in Figure 1 to Figure 4, as another preferred structural form, the low-beam primary optical element 1 sequentially, from back to front, includes at least one low-beam condensing part 11 and a low-beam light passing part 12; the low-beam light passing part 12 and the light-incidence part 31 of the projection lens 3 are integrated; and a front edge of the lower surface of the low-beam light passing part 12 is formed into a low-beam cut-off line structure 13. The high-beam primary optical element 2 includes at least one high-beam condensing part 21; a high-beam light-exiting surface 24 is formed at the front end of the high-beam condensing part 21; and when there are a plurality of high-beam condensing parts 21, a shared high-beam light-exiting surface 24 is formed at the front ends of the plurality of high-beam condensing parts 21.

In the vehicle light optical element assembly of the present invention, the front edge of the lower surface of the low-beam light passing part 12 is formed into the low-beam cut-off line structure 13, and the shape of the low-beam cut-off line structure 13 matches the shape of a low-beam cut-off line 8. The light passes through the low-beam light passing part 12 and then enters the projection lens 3, so that a low-beam lighting light shape having the low-beam cut-off line 8 can be formed through the low-beam cut-off line structure 13. Moreover, after exiting from the high-beam light-exiting surface 24 of the high-beam primary optical element 2 and then passing through the projection lens 3, the light can form a high-beam lighting light shape; part of the light exiting from the high-beam primary optical element 2 is emitted to the low-beam cut-off line structure 13, and is projected by the projection lens 3 to form a high-beam cut-off line; and at this time, the high-beam cut-off line overlaps the low-beam cut-off line 8, and the low-beam lighting light shape and the high-beam lighting light shape are well engaged.

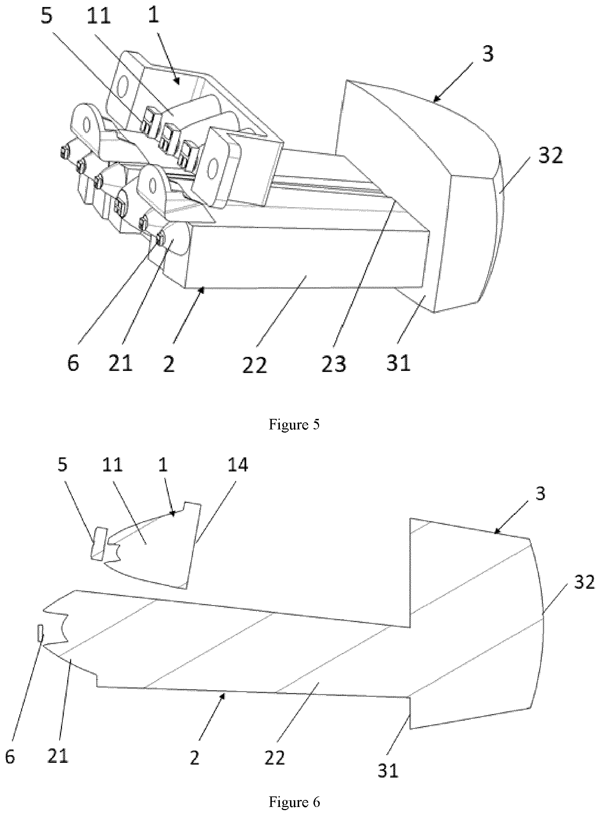

As shown in Figure 5 and Figure 6, as another optional structural form of the above-mentioned preferred structural form, the high-beam primary optical element 2 sequentially, from back to front, includes at least one high-beam condensing part 21 and a high-beam light passing part 22; the high-beam light passing part 22 and the light-incidence part 31 of the projection lens 3 are integrated; and a front edge of the upper surface of the high-beam light passing part 22 is formed into a high-beam cut-off line structure 23. The low-beam primary optical element 1 includes at least one low-beam condensing part 11; a low-beam light-exiting surface 14 is formed at the front end of the low-beam condensing part 11; and when there are a plurality of low-beam condensing parts 11, a shared low-beam light-exiting surface 14 is formed at the front ends of the plurality of low-beam condensing parts 11.

Similarly, in the vehicle light optical element assembly of the present disclosure, the front edge of the upper surface of the high-beam light passing part 22 is formed into the high-beam cut-off line structure 23, and the shape of the high-beam cut-off line structure 23 matches the shape of the low-beam cut-off line 8. The light passes through the high-beam light passing part 22 and then enters the projection lens 3, so that a high-beam lighting light shape having the high-beam cut-off line can be formed through the high-beam cut-off line structure 23.

Moreover, after exiting from the low-beam light-exiting surface 14 of the low-beam primary optical element 1 and then passing through the projection lens 3, the light can form a low-beam lighting light shape; part of the light exiting from the low-beam primary optical element 1 is emitted to the high-beam cut-off line structure 23, and is projected by the projection lens 3 to form the low-beam cut-off line 8; and at this time, the low-beam cut-off line 8 overlaps the high-beam cut-off line, and the low-beam lighting light shape and the high-beam lighting light shape are well engaged. Of course, a corresponding low-beam cut-off line structure may be provided on the light-exiting surface of the low-beam primary optical element 1.

In the above-mentioned two structural forms, one of the low-beam primary optical element 1 and the high-beam primary optical element 2 is not connected to the projection lens 3; furthermore, this optical element omits a longer light passing part, and directly forms the light-exiting surface at the front end of the condensing part, so that while it is ensured that the low-beam lighting light shape or the high-beam lighting light shape corresponding thereto can be realized, materials can be saved, and the weight of the vehicle lighting device can be reduced.

It should be explained here that according to "GB 4599-2007-Automotive Filament Bulb Headlamps", it is defined that: the light and shade cut-off line is a boundary line presenting a visibly perceptible change in light and shade after a light beam is projected onto a light distribution screen. The low-beam cut-off line 8 refers to an upper boundary of the low-beam lighting light shape, and the high-beam cut-off line refers to a lower boundary of the high-beam lighting light shape. Different countries have different regulations on the shape of the low-beam cut-off line 8. The high-beam cut-off line shall theoretically overlap the low-beam cut-off line 8 or not be provided. The light distribution screen refers to a vertical screen disposed at 25 m in front of a vehicle.

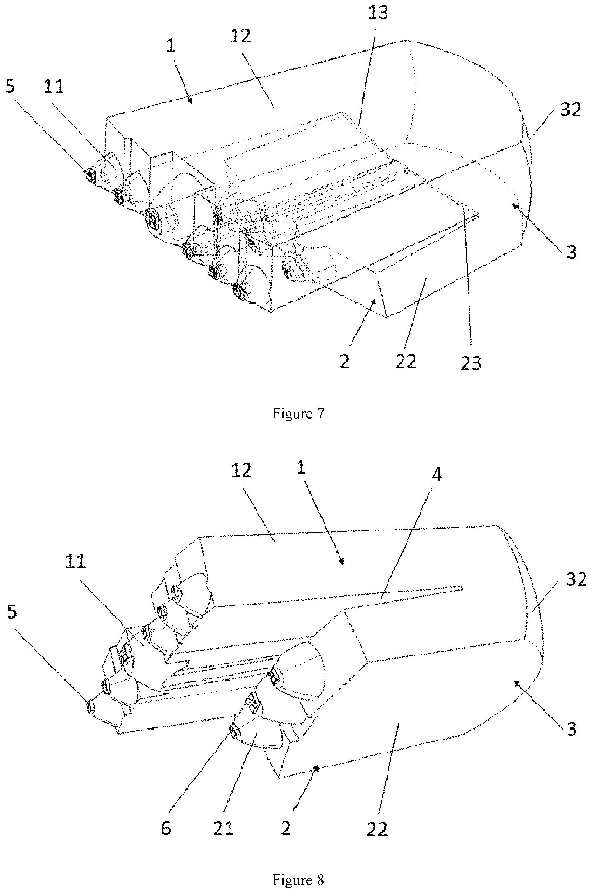

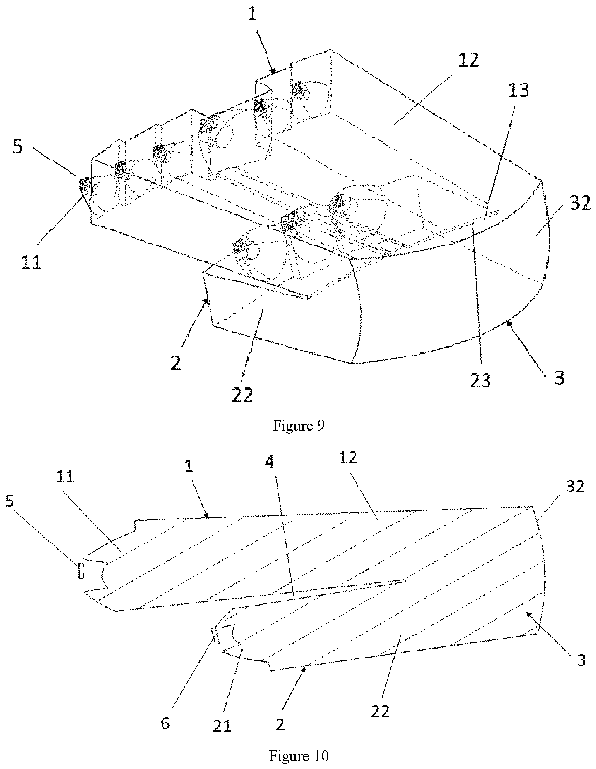

As shown in Figure 7 to Figure 10, as a further optional structural form of the above-mentioned preferred structural form, the low-beam primary optical element 1 sequentially, from back to front, includes at least one low-beam condensing part 11 and a low-beam light passing part 12. The high-beam primary optical element 2 sequentially, from back to front, includes at least one high-beam condensing part 21 and a high-beam light passing part 22. The low-beam light passing part 12 and the high-beam light passing part 22 are integrated with the light-incidence part 31 of the projection lens 3; the front edge of the lower surface of the low-beam light passing part 12 is formed into a low-beam cut-off line structure 13, and the front edge of the upper surface of the high-beam light passing part 22 is formed into a high-beam cut-off line structure 23; and a wedge-shaped gap 4 is formed between the low-beam light passing part 12 and the high-beam light passing part 22. Differing from the above-mentioned two structural forms, the low-beam primary optical element 1 and the high-beam primary optical element 2 may also be simultaneously integrated with the projection lens 3. The front edge of the lower surface of the low-beam light passing part 12 is formed into the low-beam cut-off line structure 13, and the front edge of the upper surface of the high-beam light passing part 22 is formed into the high-beam cut-off line structure 23. At this time, due to the processing technology, the low-beam cut-off line structure 13 and the high-beam cut-off line structure 23 do not overlap, thus causing a gap existing between the low-beam cut-off line 8 having the low-beam lighting light shape and the high-beam cut-off line having the high-beam lighting light shape, so that the low-beam lighting light shape and the high-beam lighting light shape cannot be well engaged. This phenomenon may be made up for through a light distribution means. The low-beam primary optical element 1, the high-beam primary optical element 2 and the projection lens 3 in the structural form are made into an integrated structure, so that the positioning and installation error is greatly reduced, and low-beam light shape and high-beam light shape with higher accuracy can be thus formed.

More preferably, a plurality of low-beam condensing parts 11 are provided in a left-right direction, and a plurality of high-beam condensing parts 21 are provided in a left-right direction.

The low-beam condensing parts 11 and the high-beam condensing parts 21 of the present invention are both of condensing cup structures, but the low-beam condensing parts 11 and the high-beam condensing parts 21 of the present invention are not limited to this structure and arrangement mode. They may also be of condensing cup structures or other condensing structures provided into a matrix, or may further be of independent condensing cup structures or other condensing structures.

As another preferred structural form, the low-beam condensing part 11 is of a condensing cup structure or a protrusion structure which protrudes towards the back.

More preferably, the high-beam condensing part 21 is of a condensing cup structure or a protrusion structure which protrudes towards the back.

The low-beam condensing part 11 and the high-beam condensing part 21 play a role in focusing and collimating light emitted by light sources, so that the low-beam condensing part 11 and the high-beam condensing part 21 may be set to be of the condensing cup structures according to their functional requirements, or may also be of the protrusion structures which protrude towards the back, or may further be of pyramid structures that protrude towards the back, or may further be of other structures, as long as they can satisfy a function of focusing and collimating the light.

As a yet further preferred structural form, the back end of the condensing cup structure is provided with a concave cavity; the bottom of the concave cavity is provided with a protrusion; and an external contour surface of the condensing cup structure is of a curved structure having an aperture that is gradually increased from the back end to the front end. Optionally, the condensing cup structure is solid, a light-incidence surface of which is a plane, a convex curved surface or a concave curved surface; and the external contour surface of the condensing cup structure is of a curved structure having an aperture that is gradually increased from the back end to the front end.

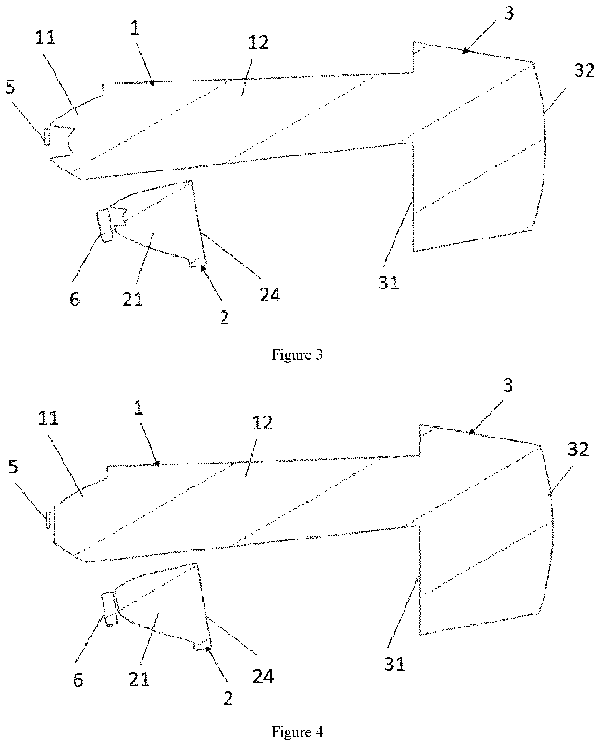

It can be seen from comparison between Figure 3 and Figure 4 that the condensing cup structure may be provided with a concave cavity, or may be solid. Both types of the condensing cup structures can meet the light focusing and collimation effect.

In addition, the present invention further provides a vehicle lighting device 7. The vehicle lighting device 7 includes low-beam light sources 5, high-beam light sources 6, and the vehicle light optical element assembly according to any one of the above-mentioned technical solutions. The low-beam light sources 5 are in one-to-one correspondence to the low-beam condensing parts 11, and the high-beam light sources 6 are in one-to-one correspondence to the high-beam condensing parts 21.

Specifically, the vehicle lighting device 7 further includes a low-beam circuit board and a high-beam circuit board; the low-beam light sources 5 are provided on the low-beam circuit board; and the high-beam light sources are provided on the high-beam circuit board. Optionally, the vehicle lighting device 7 further includes a circuit board, and the low-beam light sources 5 and the high-beam light sources 6 are both provided on the circuit board.

It can be seen from the above-mentioned description that there are a plurality of low-beam light sources 5 and a plurality of high-beam light sources 6, and the low-beam light sources 5 and the high-beam light sources 6 need to be installed on the circuit board. There may be two installation modes here: In the first mode, the low-beam light sources 5 are provided on one low-beam circuit board, and the high-beam light sources 6 are provided on one high-beam circuit board. In the second mode, the low-beam light sources 5 and the high-beam light sources 6 are provided on the same circuit board. A specific installation mode is selected according to an actual situation.

The vehicle light optical element assembly in the vehicle lighting device 7 of the present invention is smaller in size, so that the vehicle lighting device 7 of the present invention is gradually developing towards minimization. The minimization of the vehicle lighting device 7 is conductive to arranging the vehicle lighting device 7 in a limited space of a lamp body of a vehicle light at will, and can realize different light-exiting modeling surfaces by means of different arrangement forms.

Further, the present invention further provides a vehicle light, including at least one vehicle lighting device 7 according to at least one of the technical solutions.

It can be seen from Figure 11 that the vehicle light of the present invention includes three vehicle lighting devices 7. These vehicle lighting devices 7 are usually provided according to one straight line or curved line, or provided according to a matrix form. This is set according to an actual light-exiting requirement and modeling requirement of the vehicle light.

In addition, the present invention further provides a vehicle, including the vehicle light in the above-mentioned technical solution.

It can be seen from the above-mentioned description that the vehicle light optical element assembly of the present invention includes the low-beam primary optical element 1, the high-beam primary optical element 2 provided below the low-beam primary optical element 1, and the projection lens 3 provided at the front end of the low-beam primary optical element 1 and/or the high-beam primary optical element 2. The low-beam primary optical element 1 and/or the high-beam primary optical element 2 are/is integrated with the projection lens 3; and the low-beam primary optical element 1 and the high-beam primary optical element 2 are suitable for focusing and collimating light and then forming a low-beam lighting light shape and a high-beam lighting light shape via the projection lens 3. By means of integrating the low-beam primary optical element 1 with the projection lens 3, or integrating the high-beam primary optical element 2 with the projection lens 3, or simultaneously integrating the low-beam primary optical element 1 and the high-beam primary optical element 2 with the projection lens 3, the size of the vehicle light optical element assembly of the present disclosure can be effectively reduced without affecting high-beam lighting and low-beam lighting; and moreover, the positioning and installation error can also be reduced, and the optical system accuracy is improved.

The preferable implementation modes of the present invention are described above in detail with reference to the accompanying drawings. However, the present invention is not limited to the specific details in the foregoing implementation modes. Various simple variations may be made to the technical solutions of the present invention within the technical concept ranges of the present invention, and these simple variations all fall within the protection scope of the present invention, the scope being defined by the appended claims.

In addition, it should be noted that the various specific technical features described in the above specific implementation modes may be combined in any suitable manner without contradiction. In order to avoid unnecessary repetition, various possible combination modes will not be additionally described in the present invention.

In addition, various different implementation modes of the present invention may also be arbitrarily invention.

Finally, the scope of protection is defined solely by the appended claims.

## Claims

1. A vehicle light optical element assembly, comprising a low-beam primary optical element (1), a high-beam primary optical element (2) provided below the low-beam primary optical element (1), and a projection lens (3) provided on the front end of the low-beam primary optical element (1) and/or the high-beam primary optical element (2), the projection lens 8) comprises a light incidence-part (31) and a lens light exiting-part (22),
**characterized in that**
the low-beam primary optical element (1) is integrated with the projection lens (3); the low-beam primary optical element (1) sequentially, from back to front, comprises at least one low-beam condensing part (11) and a low-beam light passing part (12); the low-beam light passing part (12) and the light-incidence part (31) of the projection lens (3) are integrated, the high-beam primary optical element (2) is not connected to the projection lens (3); a front edge of a lower surface of the low-beam light passing part (12) is formed into a low-beam cut-off line structure (13); the high-beam primary optical element (2) comprises a plurality of high-beam condensing parts (21); a shared high-beam light-exiting surface (24) is formed at the front ends of the plurality of high-beam condensing parts (21); or
the high-beam primary optical element (2) is integrated with the projection lens (3); the high-beam primary optical element (2) sequentially, from back to front, comprises at least one high-beam condensing part (21) and a high-beam light passing part (22); the high-beam light passing part (22) and the light-incidence part (31) of the projection lens (3) are integrated; the low-beam primary optical element (1) is not connected to the projection lens (3); and a front edge of an upper surface of the high-beam light passing part (22) is formed into a high-beam cut-off line structure (23); the low-beam primary optical element (1) comprises a plurality of low-beam condensing parts (11); a shared low-beam light-exiting surface (14) is formed at the front ends of the plurality of low-beam condensing parts (11); or
the low-beam primary optical element (1) sequentially, from back to front, comprises at least one low-beam condensing part (11) and a low-beam light passing part (12); the high-beam primary optical element (2) sequentially, from back to front, comprises at least one high-beam condensing part (21) and a high-beam light passing part (22); the low-beam light passing part (12) and the high-beam light passing part (22) are integrated with the light-incidence part (31) of the projection lens (3); a front edge of a lower surface of the low-beam light passing part (12) is formed into a low-beam cut-off line structure (13), and a front edge of an upper surface of the high-beam light passing part (22) is formed into a high-beam cut-off line structure (23); the low-beam cut-off line structure (13) and the high-beam cut-off line structure (23) do not overlap; a wedge-shaped gap (4) is formed
between the low-beam light passing part (12) and the high-beam light passing part (22); the light-incidence part (31) of the projection lens (3) is a plane, a backwards protruding curved surface or a forwards protruding curved surface; and the lens light-exiting part (32) is a forwards protruding curved surface; and the low-beam primary optical element (1) and the high-beam primary optical element (2) are suitable for focusing and collimating light and then forming a low-beam lighting light shape and a high-beam lighting light shape via the projection lens (3).

2. The vehicle light optical element assembly according to claim 1, wherein a plurality of low-beam condensing parts (11) are provided in a left-right direction, and a plurality of high-beam condensing parts (21) are provided in a left-right direction.

3. The vehicle light optical element assembly according to claim 1, wherein the low-beam condensing part (11) and the high-beam condensing part (21) are both a condensing cup structure,
a back end of the condensing cup structure is provided with a concave cavity; the bottom of the concave cavity is provided with a protrusion; an external contour surface of the condensing cup structure is of a curved structure having an aperture that is gradually increased from the back end to the front end; or
the condensing cup structure is solid, a light-incidence surface of which is a plane, a convex curved surface or a concave curved surface; and an external contour surface of the condensing cup structure is of a curved structure having an aperture that is gradually increased from the back end to the front end.

4. The vehicle light optical element assembly according to claim 1, wherein the low-beam condensing part (11) is of a protrusion structure which protrudes towards the back, and the high-beam condensing part (21) is a protrusion structure which protrudes towards the back.

5. A vehicle lighting device, comprising low-beam light sources (5), high-beam light sources (6), and the vehicle light optical element assembly according to any one of claims 1 to 4, wherein the low-beam light sources (5) are in one-to-one correspondence to the low-beam condensing parts (11), and the high-beam light sources (6) are in one-to-one correspondence to the high-beam condensing parts (21).

6. The vehicle lighting device according to claim 5, further comprising a low-beam circuit board and a high-beam circuit board; the low-beam light sources (5) are provided on the low-beam circuit board; the high-beam light sources (6) are provided on the high-beam circuit board; or
the vehicle lighting device further comprises a circuit board, wherein the low-beam light sources (5) and the high-beam light sources (6) are both provided on the circuit board.

7. A vehicle light, comprising at least one vehicle lighting device (7) according to claim 5 or 6.

8. A vehicle, comprising the vehicle light according to claim 7.

## Patentansprüche

1. Fahrzeugleuchten-Optikelementanordnung, die ein Abblendlicht-Primäroptikelement (1), ein Fernlicht-Primäroptikelement (2), das unterhalb des Abblendlicht-Primäroptikelements (1) angeordnet ist, und eine Projektionslinse (3), die am vorderen Ende des Abblendlicht-Primäroptikelements (1) und/oder des Fernlicht-Primäroptikelements (2) angeordnet ist, umfasst, wobei die Projektionslinse (3) einen Linsenlichteintrittsabschnitt (31) und einen Linsenlichtaustrittsabschnitt (32) umfasst; **dadurch gekennzeichnet, dass**
das Abblendlicht-Primäroptikelement (1) und die Projektionslinse (3) einteilig ausgebildet sind und das Abblendlicht-Primäroptikelement (1) von hinten nach vorne der Reihe nach mindestens einen Abblendlicht-Lichtbündelungsabschnitt (11) und einen Abblendlicht-Lichtdurchlassabschnitt (12) umfasst, wobei der Abblendlicht-Lichtdurchlassabschnitt (12) und der Linsenlichteintrittsabschnitt (31) einteilig ausgebildet sind, wobei das Fernlicht-Primäroptikelement (2) nicht mit der Projektionslinse (3) verbunden ist, wobei die Vorderkante der unteren Oberfläche des Abblendlicht-Lichtdurchlassabschnitts (12) eine Abblendlicht-Hell-Dunkel-Grenzenstruktur (13) bildet; wobei das Fernlicht-Primäroptikelement (2) mindestens einen Fernlicht-Lichtbündelungsabschnitt (21) umfasst und die vorderen Enden der mehreren Fernlicht-Lichtbündelungsabschnitte (21) eine gemeinsame Fernlicht-Lichtaustrittsfläche (24) bilden; oder
das Fernlicht-Primäroptikelement (2) und die Projektionslinse (3) einteilig ausgebildet sind und das Fernlicht-Primäroptikelement (2) von hinten nach vorne der Reihe nach mindestens einen Fernlicht-Lichtbündelungsabschnitt (21) und einen Fernlicht-Lichtdurchlassabschnitt (22) umfasst, wobei der Fernlicht-Lichtdurchlassabschnitt (22) und der Linsenlichteintrittsabschnitt (31) einteilig ausgebildet sind, wobei das Abblendlicht-Primäroptikelement (1) nicht mit der Projektionslinse (3) verbunden ist, wobei die Vorderkante der oberen Oberfläche des Fernlicht-Lichtdurchlassabschnitts (22) eine Fernlicht-Hell-Dunkel-Grenzenstruktur (23) bildet; wobei das Abblendlicht-Primäroptikelement (1) mindestens einen Abblendlicht-Lichtbündelungsabschnitt (11) umfasst und die vorderen Enden der mehreren Abblendlicht-Lichtbündelungsabschnitte (11) eine gemeinsame Abblendlicht-Lichtaustrittsfläche (14) bilden; oder
das Abblendlicht-Primäroptikelement (1) von hinten nach vorne der Reihe nach mindestens einen Abblendlicht-Lichtbündelungsabschnitt (11) und einen Abblendlicht-Lichtdurchlassabschnitt (12) umfasst und das Fernlicht-Primäroptikelement (2) von hinten nach vorne der Reihe nach mindestens einen Fernlicht-Lichtbündelungsabschnitt (21) und einen Fernlicht-Lichtdurchlassabschnitt (22) umfasst, wobei der Abblendlicht-Lichtdurchlassabschnitt (12), der Fernlicht-Lichtdurchlassabschnitt (22) und der Linsenlichteintrittsabschnitt (31) einteilig ausgebildet sind, wobei die Vorderkante der unteren Oberfläche des Abblendlicht-Lichtdurchlassabschnitts (12) eine Abblendlicht-Hell-Dunkel-Grenzenstruktur (13) bildet und die Vorderkante der oberen Oberfläche des Fernlicht-Lichtdurchlassabschnitts (22) eine Fernlicht-Hell-Dunkel-Grenzenstruktur (23) bildet, wobei die Abblendlicht-Hell-Dunkel-Grenzenstruktur (13) nicht mit der Fernlicht-Hell-Dunkel-Grenzenstruktur (23) überlappt und zwischen dem Abblendlicht-Lichtdurchlassabschnitt (12) und dem Fernlicht-Lichtdurchlassabschnitt (22) ein keilförmiger Zwischenraum (4) gebildet ist;
wobei der Linsenlichteintrittsabschnitt (31) eine ebene Fläche, eine nach hinten vorstehende gewölbte Fläche oder eine nach vorne vorstehende gewölbte Fläche ist, wobei der Linsenlichtaustrittsabschnitt (32) eine nach vorne vorstehende gewölbte Fläche ist, und wobei das Abblendlicht-Primäroptikelement (1) und das Fernlicht-Primäroptikelement (2) dazu eingerichtet sind, Lichtstrahlen zu bündeln und kollimieren und danach über die Projektionslinse (3) eine Abblendlicht-Beleuchtungslichtverteilung bzw. eine Fernlicht-Beleuchtungslichtverteilung zu erzeugen.

2. Fahrzeugleuchten-Optikelementanordnung nach Anspruch 1, **dadurch gekennzeichnet, dass** der Abblendlicht-Lichtbündelungsabschnitt (11) in einer Mehrzahl bereitgestellt und entlang der Links-Rechts-Richtung angeordnet ist, und der Fernlicht-Lichtbündelungsabschnitt (21) in einer Mehrzahl bereitgestellt und entlang der Links-Rechts-Richtung angeordnet ist.

3. Fahrzeugleuchten-Optikelementanordnung nach Anspruch 1, **dadurch gekennzeichnet, dass** der Abblendlicht-Lichtbündelungsabschnitt (11) eine Lichtbündelungsschalenstruktur und der Fernlicht-Lichtbündelungsabschnitt (21) eine Lichtbündelungsschalenstruktur ist,
ein hinteres Ende der Lichtbündelungsschalenstruktur mit einer konkaven Kammer versehen ist, deren Boden mit einem Vorsprung versehen ist, wobei eine Außenkonturfläche der Lichtbündelungsschalenstruktur eine gewölbte Struktur mit einer Öffnung ist, die vom hinteren Ende zum vorderen Ende hin allmählich zunimmt; oder
die Lichtbündelungsschalenstruktur massiv ausgebildet ist und ihre Lichteintrittsfläche eine ebene Fläche, eine konkav gewölbte Fläche oder eine konvex gewölbte Fläche ist, wobei eine Außenkonturfläche der Lichtbündelungsschalenstruktur eine gewölbte Flächenstruktur mit einer Öffnung ist, die vom hinteren Ende zum vorderen Ende hin allmählich zunimmt.

4. Fahrzeugleuchten-Optikelementanordnung nach Anspruch 1, **dadurch gekennzeichnet, dass** der Abblendlicht-Lichtbündelungsabschnitt (11) eine nach hinten vorstehende Vorsprungsstruktur und der Fernlicht-Lichtbündelungsabschnitt (21) eine nach hinten vorstehende Vorsprungsstruktur ist.

5. Fahrzeugbeleuchtungsvorrichtung, die Abblendlichtquellen (5), Fernlichtquellen (6) und die Fahrzeugleuchten-Optikelementanordnung nach einem der Ansprüche 1 bis 4 umfasst, wobei die Abblendlichtquellen (5) den Abblendlicht-Lichtbündelungsabschnitten (11) eineindeutig zugeordnet und die Fernlichtquellen (6) den Fernlicht-Lichtbündelungsabschnitten (21) eineindeutig zugeordnet sind.

6. Fahrzeugbeleuchtungsvorrichtung nach Anspruch 5, **dadurch gekennzeichnet, dass** sie ferner eine Abblendlichtplatine und eine Fernlichtplatine umfasst, wobei die Abblendlichtquellen (5) an der Abblendlichtplatine angeordnet und die Fernlichtquellen (6) an der Fernlichtplatine angeordnet sind; oder
dass sie ferner eine Platine umfasst, an der sowohl die Abblendlichtquellen (5) als auch die Fernlichtquellen (6) angeordnet sind.

7. Fahrzeugleuchte, die mindestens eine Fahrzeugbeleuchtungsvorrichtung (7) nach Anspruch 5 oder 6 umfasst.

8. Fahrzeug, das die Fahrzeugleuchte nach Anspruch 7 umfasst.

## Revendications

1. Ensemble d'éléments optiques de luminaire de véhicule, comprenant un élément optique primaire de feu de croisement (1), un élément optique primaire de feu de route (2) disposé au-dessous de l'élément optique primaire de feu de croisement (1), et une lentille de projection (3) disposée à l'extrémité avant de l'élément optique primaire de feu de croisement (1) et / ou de l'élément optique primaire de feu de route (2), la lentille de projection (3) comprenant une partie d'incidence de lumière (31) et une partie de sortie de lumière de lentille (32), **caractérisé en ce que** :
l'élément optique primaire de feu de croisement (1) est intégré à la lentille de projection (3) ;
l'élément optique primaire de feu de croisement (1) comprend séquentiellement, de l'arrière vers l'avant, au moins une partie de condensation de feu de croisement (11) et une partie de passage de lumière de feu de croisement (12) ; la partie de passage de lumière de feu de croisement (12) et la partie d'incidence de lumière (31) de la lentille de projection (3) sont intégrées ; l'élément optique primaire de feu de route (2) n'est pas relié à la lentille de projection (3) ; un bord avant d'une surface inférieure de la partie de passage de lumière de feu de croisement (12) est formé en une structure de ligne de coupure de feu de croisement (13) ; l'élément optique primaire de feu de route (2) comprend plusieurs parties de condensation de feu de route (21) ; et une surface de sortie de lumière de feu de route partagée (24) est formée aux extrémités avant des plusieurs parties de condensation de feu de route (21) ; ou
l'élément optique primaire de feu de route (2) est intégré à la lentille de projection (3) ; l'élément optique primaire de feu de route (2) comprend séquentiellement, de l'arrière vers l'avant, au moins une partie de condensation de feu de route (21) et une partie de passage de lumière de feu de route (22) ; la partie de passage de lumière de feu de route (22) et la partie d'incidence de lumière (31) de la lentille de projection (3) sont intégrées ; l'élément optique primaire de feu de croisement (1) n'est pas relié à la lentille de projection (3) ; un bord avant d'une surface supérieure de la partie de passage de lumière de feu de route (22) est formé en une structure de ligne de coupure de feu de route (23) ; l'élément optique primaire de feu de croisement (1) comprend plusieurs parties de condensation de feu de croisement (11) ; et une surface de sortie de lumière de feu de croisement partagée (14) est formée aux extrémités avant des plusieurs parties de condensation de feu de croisement (11) ; ou
l'élément optique primaire de feu de croisement (1) comprend séquentiellement, de l'arrière vers l'avant, au moins une partie de condensation de feu de croisement (11) et une partie de passage de lumière de feu de croisement (12) ; l'élément optique primaire de feu de route (2) comprend séquentiellement, de l'arrière vers l'avant, au moins une partie de condensation de feu de route (21) et une partie de passage de lumière de feu de route (22) ; la partie de passage de lumière de feu de croisement (12) et la partie de passage de lumière de feu de route (22) sont intégrées à la partie d'incidence de lumière (31) de la lentille de projection (3) ; un bord avant d'une surface inférieure de la partie de passage de lumière de feu de croisement (12) est formé en une structure de ligne de coupure de feu de croisement (13) ; un bord avant d'une surface supérieure de la partie de passage de lumière de feu de route (22) est formé en une structure de ligne de coupure de feu de route (23) ; la structure de ligne de coupure de feu de croisement (13) et la structure de ligne de coupure de feu de route (23) ne se chevauchent pas ; une fente en forme de coin (4) est formée entre la partie de passage de lumière de feu de croisement (12) et la partie de passage de lumière de feu de route (22) ; la partie d'incidence de lumière (31) de la lentille de projection (3) est un plan, une surface courbe faisant saillie vers l'arrière ou une surface courbe faisant saillie vers l'avant ; la partie de sortie de lumière de lentille (32) est une surface courbe faisant saillie vers l'avant ; et l'élément optique primaire de feu de croisement (1) et l'élément optique primaire de feu de route (2) sont adaptés pour focaliser et collimater de la lumière et ensuite former une forme de lumière d'éclairage de feu de croisement et une forme de lumière d'éclairage de feu de route par l'intermédiaire de la lentille de projection (3).

2. Ensemble d'éléments optiques de luminaire de véhicule selon la revendication 1, dans lequel plusieurs parties de condensation de feu de croisement (11) sont disposées en direction gauche droite, et plusieurs parties de condensation de feu de route (21) sont disposées en direction gauche droite.

3. Ensemble d'éléments optiques de luminaire de véhicule selon la revendication 1, dans lequel aussi bien la partie de condensation de feu de croisement (11) que la partie de condensation de feu de route (21) sont une structure de coupelle de condensation,
une extrémité arrière de la structure de coupelle de condensation étant pouvue d'une cavité concave, le fond de la cavité concave étant pourvu d'une saillie, et une surface de contour externe de la structure de coupelle de condensation présentant une structure courbe avec une ouverture qui augmente progressivement depuis l'extrémité arrière vers l'extrémité avant, ou la structure de coupelle de condensation étant un solide dont une surface d'incidence de lumière est un plan, une surface courbe convexe ou une surface courbe concave, une surface de contour externe de la structure de coupelle de condensation présentant une structure courbe avec une ouverture qui augmente progressivement depuis l'extrémité arrière vers l'extrémité avant.

4. Ensemble d'éléments optiques de luminaire de véhicule selon la revendication 1, dans lequel la partie de condensation de feu de croisement (11) présente une structure en saillie qui fait saillie vers l'arrière, la partie de condensation de feu de route (21) présentant une structure en saillie qui fait saillie vers l'arrière.

5. Dispositif d'éclairage de véhicule (7), comprenant des sources de lumière de feu de croisement (5), des sources de lumière de feu de route (6) et l'ensemble d'éléments optiques de luminaire de véhicule selon l'une quelconque des revendications 1 à 4, les sources de lumière de feu de croisement (5) étant en correspondance biunivoque avec les parties de condensation de feu de croisement (11), et les sources de lumière de feu de route (6) étant en correspondance biunivoque avec les parties de condensation de feu de route (21).

6. Dispositif d'éclairage de véhicule (7) selon la revendication 5,
comprenant en outre une carte de circuit imprimé de feu de croisement et une carte de circuit imprimé de feu de route, les sources de lumière de feu de croisement (5) étant disposées sur la carte de circuit imprimé de feu de croisement, et les sources de lumière de feu de route (6) étant disposées sur la carte de circuit imprimé de feu de route, ou
comprenant en outre une carte de circuit imprimé, aussi bien les sources de lumière de feu de croisement (5) que les sources de lumière de feu de route (6) étant disposées sur la carte de circuit imprimé.

7. Luminaire de véhicule, comprenant au moins un dispositif d'éclairage de véhicule (7) selon la revendication 5 ou 6.

8. Véhicule, comprenant le luminaire de véhicule selon la revendication 7.
